(19) Europäisches Patentamt

European Patent Office

Office européen des brevets

(11) Publication number: **0 241 330 B1**

## (12) EUROPEAN PATENT SPECIFICATION

(45) Date of publication of patent specification: **28.04.93**  (51) Int. Cl.⁵: **H01B 7/28,** H01B 7/34, H01B 3/44, G02B 6/44

(21) Application number: **87400562.2**

(22) Date of filing: **13.03.87**

---

(54) Oil resistant cable.

---

(30) Priority: **13.03.86 NO 860950**

(43) Date of publication of application:
**14.10.87 Bulletin  87/42**

(45) Publication of the grant of the patent:
**28.04.93 Bulletin  93/17**

(84) Designated Contracting States:
**DE FR GB IT NL**

(56) References cited:
**EP-A- 0 175 419**
**DE-A- 2 727 520**
**DE-A- 2 733 701**
**US-A- 4 547 626**

(73) Proprietor: **STANDARD TELEFON OG KABEL-FABRIK A/S**
**Postboks 60 Okern**
**N-0506 Oslo 5(NO)**

(72) Inventor: **Pedersen, Jack Raymond**
**Festeveien 8**
**N-1500 Moss(NO)**
Inventor: **Granheim, Ivar**
**Marcus Thranes Vei 40 B**
**N-1470 Lorenskog(NO)**

(74) Representative: **Schaub, Bernard et al**
**c/o SOSPI 14-16 rue de la Baume**
**F-75008 Paris (FR)**

Rank Xerox (UK) Business Services
(3.10/3.5x/3.0.1)

## Description

The present invention relates to power and/or telecommunication cables which will be exposed to oil in high fire risk areas like petrochemical and industrial installations. In order to obtain flame retardant properties cable sheaths usually contain inorganic fine particle filling materials like aluminium tri hydroxide $(Al(OH)_3)$, magnesium hydroxide $(Mg(OH)_2)$ $MgCO_3$, Zn borates or the like. As a rule increased amounts of filling materials of this kind will result in improved flame retardant properties. The oil resistivity of known cables is, however, not very good and when the cable from time to time is subjected to oil or other petrochemicals, the cable sheath and insulation material will be impaired so that the good flame retardant and electrical properties will be lost.

The object of the present invention is to make a cable which is flame retardant and has improved oil resistivity as compared to known cables.

The features of the invention are defined in claim 1.

Tests have shown that cables made in accordance with the present invention withstand the IEC 332-3 category C fire retardence test. The materials also retain more than 60% of their original mechanical properties after ageing for 7 days at 90°C, in ASTM oil No. 2.

Above mentioned and other features and objects of the present invention will clearly appear from the following detailed description of embodiments of the invention taken in conjunction with the drawings, where

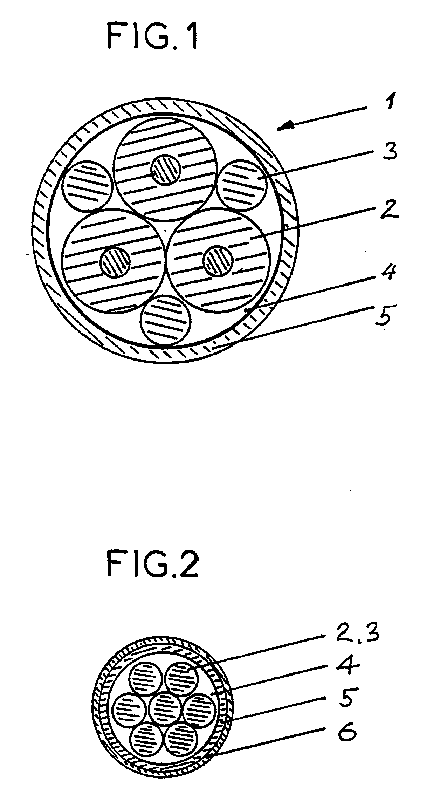

Figures 1 and 2 show the crossection of two cables having sheaths as defined.

In Fig. 1 a cable core 1 may contain one or more electrical conductors 2 and/or optical fibers 3 included within an outer protective sheath 5 and possibly an outer protective sheath 4 which fills all interstices between the insulated conductors. The sheath 5 and preferably also the sheath 4 have improved oil resistivity. In Fig. 2 is illustrated a cable similar to that of Fig. 1 and having an outermost protective sheath 6 of nylon.

The base material of the outer protective sheath 5 and possibly the sheath 4 should be chosen from the group of materials which are commonly known as ethylene copolymers and which includes ethylene vinyl acetate (EVA), ethylene ethyl acrylate (EEA), ethylene butyl acrylate (EBA), ethylene propylene polymer (EPR), ethylene propylene diene monomer (EPDM) or similar materials.

In the sheaths 4 and 5 the amount of base material should be in the range of 40 to 90 weight %.

In order to obtain the desired oil resistivity, the sheaths may contain polyethylene with high density (PEH) having a density between 0,941 and 0,960 and a melting index of 0,1 to 10,0, preferably 0,1 to 2,0. The sheaths may alternatively contain linear low density polyethylene (LLDPE), a polyamide or a combination of PEH, LLDPE and/or polyamide.

The polyamide could be included in the form of nylon 11 or nylon 12 having a relative solubility viscosity (according to ISO 307) in the range of 1,0 to 3,0 preferably about 2,1. The polyamide may contain compatible plasticizers normally used in PA 11 & 12 like benzolsulfoneamide. The amount of PEH, LLDPE and/or polyamide in the sheaths should be in the range of 5 to 40 weight %.

The polymers to be blended are not soluble and the PEH, LLDPE and/or polyamide portion will form small particles dispersed in the main polymer matrix. On extrusion the polymer additive forms fibrils. These are very oil resistant. This mixture of polymers used in a cable will have improved oil resistance because the oil will have a very long distance to travel in order to penetrate the sheath.

The sheath material may be of the thermoplastic type or it may be crosslinked by adding crosslinking agents like silan or peroxide during the material mixing process or as an additive in the original materials. Crosslinking may also be obtained by subjecting the cable sheaths to radiation.

Normal material handling agents like lubricating agents such as polymer waxes, stearic acid, hydrocarbon waxes, fatty acid amides and antioxidants, may also be added. The amounts of crosslinking and material handling agents in the final product constitute less than 7 weight %.

The sheath material to be extruded over the cable conductors and cable core should preferably be made by starting out from melting polyethylene/polyamide material (the material with the highest melting point). Into this melted polymer it is advisable to blend a material with greater solubility, such as one or more of the base materials in the flame retardent halogene free sheathing material, in an amount of 10 to 50 weight %. This may as mentioned be chosen from the group of materials commonly known as ethylene copolymers and which includes: EVA, EEA, EBA, EPR, EPDM and similar materials. This blend or so called masterbatch (MB) can now be blended with the base sheathing compound in the range of 10 to 60 weight %.

## Example of blends for oil resistant sheath

Blend 1:

Base sheath material (halogene free, flame retardant).

| | | |
|---|---|---|
| Silane crosslinkable EVA | : | 40 weight % |
| Thermoplastic EVA | : | 30 " |
| Masterbatch, containing nylon 12: 70 weight % Thermoplastic EVA 30 " | | 30 " |
| | | 100 weight % |

Blend 2:

Base sheath material (as for ex. 1)

| | | |
|---|---|---|
| Silane crosslinkable EVA | : | 83 weight % |
| High density polyethylene (PEH): | | 17 " |
| | | 100 weight % |

## Example of effect on 2) after ageing in ASTM oil No. 2.

(Samples taken from extruded tape)

| | Pure crosslinkable EVA | | Blend 2 | |
|---|---|---|---|---|
| | Tensile strength | Elonga- tion | Tensile strength | Elonga- tion |
| Original properties | 10,0 (Mpa) | 130% | 10,6(Mpa) | 142% |
| % retation of original properties after age- ing in ASTM oil No. 2 | less than 60 | | 69 | 74 |

In Fig. 2 which includes an outer sheath 6 of nylon, experiments have shown that this nylon sheath adheres better to the lower sheath 5 when this sheath contains nylon, than to known sheath.

The following test has been made: Bend test, 180°, on 12 times the cable diameter. Result: Less wrinkles on the inside bend with nylon in sheath 5.

The above detailed description of embodiments of this invention must be taken as examples only and should not be considered as limitations on the scope of protection.

**Claims**

1. Oil resistant power and/or telecommunication cable containing a number of insulated conductors (2, 3) and/or optical fibers within one or more outer protective sheaths (4, 5),
   **characterized in this that at**
   least one of the outer protective sheaths (4, 5) contains an oil resistant material made up of a mixture of polyethylene and polyamide, in a base material of ethylene copolymers.

2. Cable according to claim 2, wherein the amount of oil resistant material in said at least one of the outer protective sheaths is in the range of 5-40 weight %.

3. Cable according to claim 1 or 2, wherein said polyethylene is a high density polyethylene of a density between 0,941 and 0,960 and of a melting index of 0,1 to 10, preferably 0,1 - 2,0.

4. Cable according to claim 1 or 2, wherein said polyamide is nylon 11 or nylon 12 having a relative solubility viscosity, according to ISO 307, in the range of 1,0 to 3,0, preferably about 2,1.

5. Cable according to claim 1, 2, 3, or 4, also comprising an outermost protective sheath (6) of 100% nylon and wherein the next-outer protective sheath (4, 5) contains nylon up to 40 weight %.

6. Cable according to claim 1, 2, 3, 4, or 5, wherein one of said outer protective sheaths (4,5) fills all interstices between the insulated conductors.

**Patentansprüche**

1. Ölfestes Leistungs- und/oder Nachrichtenübertragungskabel mit einer Anzahl von isolierten Leitern (2, 3) und/oder Glasfasern in einer oder mehreren Außenschutzhüllen (4, 5),
**dadurch gekennzeichnet**, daß
mindestens eine der Außenschutzhüllen (4, 5) ein ölfestes Material enthält, das aus einem Gemisch aus Polyäthylen und Polyamid in einem Grundmaterial aus Äthylencopolymeren besteht.

2. Kabel nach Anspruch 1,
**dadurch gekennzeichnet**, daß
die Menge des ölfesten Materials in mindestens einer der Außenschutzhüllen im Bereich von 5 - 40 Gewichts % liegt.

3. Kabel nach Anspruch 1 oder 2,
**dadurch gekennzeichnet**, daß
das Polyäthylen ein Hochdichtepolyäthylen mit einer Dichte zwischen 0,941 und 0,96 und einem Schmelzindex von 0,1 - 10, vorzugsweise 0,1 - 2,0, ist.

4. Kabel nach Anspruch 1 oder 2,
**dadurch gekennzeichnet**, daß
das Polyamid Nylon 11 oder Nylon 12 mit einer relativen Viskosität nach ISO 307 im Bereich 1,0 - 3,0, vorzugsweise 2,1, ist.

5. Kabel nach einem der Ansprüche 1 - 4 mit einer äußersten Schutzhülle (6) aus 100 % Nylon,
**dadurch gekennzeichnet**, daß
die nächstfolgende Schutzhülle (4,5) Nylon bis zu 40 Gewichts % enthält.

6. Kabel nach einem der Ansprüche 1 - 5,
**dadurch gekennzeichnet**, daß
eine der Außen-Schutzhüllen (4,5) alle Zwischenräume zwischen den isolierten Leitern ausfüllt.

**Revendications**

1. Câble de télécommunication et/ou de transport d'énergie résistant à l'huile contenant un certain nombre de conducteurs isolés (2, 3), et/ou de fibres optiques dans une ou plusieurs gaines protectrices externes (4, 5), caractérisé en ce que l'une au moins des gaines protectrices externes (4, 5) contiennent un matériau résistant à l'huile composé d'un mélange de polyéthylène et de polyamide, dans un matériau de base de copolymères d'éthylène.

2. Câble conforme à la revendication 1, dans lequel la proportion de matériau résistant à l'huile dans ladite au moins une des gaines protectrices externes est de l'ordre de 5 à 40% en poids.

3. Câble conforme à la revendication 1 ou 2, dans lequel ledit polyéthylène est un polyéthylène haute densité, d'une densité comprise entre 0,941 et 0,960 et d'un indice de fusion de 0,1 à 10,0, de préférence 0,1 à 2,0.

4. Câble conforme à la revendication 1 ou 2, dans lequel ledit polyamide est du nylon 11 ou du nylon 12, ayant une viscosité solubilité, selon la norme ISO 307, dans la plage 1,0 à 3,0, de préférence 2,1.

5. Câble conforme à la revendication 1, 2, 3 ou 4, comprenant aussi une gaine protectrice la plus externe (6) en nylon à 100%, dans lequel la gaine protectrice précédant la plus externe (4,5) contient du nylon jusqu'à 40% en poids.

6. Câble conforme à la revendication 1, 2, 3, 4 ou 5, dans lequel une desdites gaines protectrices externes (4, 5) remplit tous les interstices entre lesdits conducteurs isolés.

# FIG.1

# FIG.2